# EUROPEAN PATENT SPECIFICATION

(11) **EP 3 536 592 B1**
(45) Date of publication and mention of the grant of the patent: **29.09.2021**
(21) Application number: 19161127.6
(22) Date of filing: 06.03.2019
(51) Int. Cl.: B62J 43/28, B62J 43/16, B62K 19/40, B62M 7/04, B62K 11/06, B62K 19/48, B62J 9/12, B60L 50/60, B62K 19/16

(54) **STRADDLED ELECTRIC VEHICLE**
ELEKTRISCHES GRÄTSCHSITZFAHRZEUG
VÉHICULE ÉLECTRIQUE DU TYPE À ENFOURCHER

(30) Priority: 08.03.2018 JP 2018041661
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: Toyota, Takeshi, Shizuoka, 438-8501 (JP); Yamada, Masatoshi, Shizuoka, 438-0026 (JP)
(74) Representative: Zimmermann, Tankred Klaus

(56) References cited:
- EP-A2- 1 142 780
- WO-A1-2014/154295
- JP-A- 2013 208 935

## Description

### TECHNICAL FIELD

The present invention relates to a straddled electric vehicle equipped with a battery and an electric motor.

### BACKGROUND ART

A conventional straddled electric vehicle is described, for example, in Patent Literature 1. This straddled electric vehicle is an off-road type motorcycle. The straddled electric vehicle has a vehicle body. The vehicle body has a main member including a head pipe, a battery case, and a case cover. The head pipe supports a front fork. The front fork supports a front wheel. The battery case is disposed behind the head pipe in a vehicle-body backward direction. The battery case constitutes a frame of the straddled electric vehicle. The battery case has a cuboid-like box shape which is opened in a vehicle-body upward direction. The case cover is a lid for covering the opening of the battery case. When mounting the battery, a user opens the case cover and inserts the battery into the battery case from above via the opening of the battery case. Thereafter, the user closes the case cover.

In the straddled electric vehicle described in Patent Literature 1, the opening of the battery case which constitutes the frame of the straddled electric vehicle is located further upward in the vehicle-body upward direction than a bottom face of the battery. As a result, the battery case which constitutes the frame of the straddled electric vehicle is present to the left and the right of the battery. Therefore, in the straddled electric vehicle described in Patent Literature 1, it is possible to ensure rigidity of the frame.

### CITATION LIST

### PATENT LITERATURE

Patent Literature 1: Japanese Patent Application Publication No. 2015-89757

In WO 2014-154295 A1 a motor scooter comprising a main frame with frame sections at least partly extending along an outline of the motor scooter is disclosed, the frame sections being bridged by cross members supporting electric drive modules between the frame sections. The frame sections can for example form of one-piece tubular loop. The electric drive modules can for example include one or more removable batteries and/or power electronics and/or a charging unit.

In a similar way a motor scooter disclosed in JP 2013 208935 A provides a housing for battery under a seat for a rider in a rear part of the scooter. The tubular housing of the battery can be accessed by opening a lid situated at the rear end of the scooter and/or housing for introducing the battery in the housing.

EP 1 142 780 A2 discloses a foldable bicycle which allows the rider to easily and securely fold and unfold the bicycle. In a part of the frame of the bicycle, a tubular/cylindrical housing for a battery is provided the cylindrical housing being part of the frame itself. The battery is introduced into the tube on a front end of the tube being located above a front wheel of the bicycle. EP 1 142 780 A2 discloses a straddled electric vehicle according to the preamble of claim 1.

### SUMMARY OF INVENTION

### TECHNICAL PROBLEM

In the straddled electric vehicle described in Patent Literature 1, the user inserts the battery into the battery case from above via the opening of the battery case which constitutes the frame of the straddled electric vehicle. Therefore, the opening of the battery case which constitutes the frame of the straddled electric vehicle has a shape through which the battery can pass in the battery upward or downward direction. Since the battery as seen in the battery upward or downward direction is long in the vehicle-body front-back direction, the area of the opening of the battery case which constitutes the frame of the straddled electric vehicle is increased. As a result, it is likely that the rigidity of the battery case which constitutes the frame of the straddled electric vehicle decreases. The battery case is a part of the frame of the straddled electric vehicle. Therefore, when the rigidity of the battery case decreases, the rigidity of the frame of the straddled electric vehicle decreases. To restrict a decrease in the rigidity of the frame of the straddled electric vehicle, it is conceivable, for example, to increase the thickness of the battery case which constitutes the frame of the straddled electric vehicle. However, when the thickness of the battery case which constitutes the frame of the straddled electric vehicle is increased, the weight of the frame of the straddled electric vehicle increases.

Accordingly, it is an object of the present invention to provide a straddled electric vehicle which can restrict a decrease in the rigidity of the main member in which a battery housing space for housing the battery is formed, and an increase in the weight of the main member.

### SOLUTION TO PROBLEM

A straddled electric vehicle according to the invention is provided by the subject-matter of independent claim 1. Preferred features of the straddled electric vehicle according to the invention are provided by the dependent claims.

A straddled electric vehicle of a first aspect is a straddled electric vehicle according to the subject-matter of independent claim 1.

According to the straddled electric vehicle of the first aspect, it is possible to restrict a decrease in the rigidity of the main member in which the battery housing space for housing the battery is formed, and an increase in the weight of the main member. To be more specific, the battery attachment/detachment opening permits the battery to pass in the battery frontward or backward direction . Therefore, a user can have the battery housed in the battery housing part via the battery attachment/detachment opening by moving the battery in the battery frontward or backward direction. Moreover, the user can take out the battery from the battery housing part via the battery attachment/detachment opening by moving the battery in the battery backward or frontward direction. On the other hand, the battery attachment/detachment opening prevents the battery from passing in the battery upward or downward direction. Therefore, the user cannot have the battery housed in the battery housing part via the battery attachment/detachment opening by moving the battery in the battery upward or downward direction. Moreover, the user cannot take out the battery from the battery housing part via the battery attachment/detachment opening by moving the battery in the battery upward or downward direction. In this way, the battery attachment/detachment opening may not have a shape permitting the battery to pass in the battery frontward or backward direction and permitting the battery to pass in the battery upward or downward direction. This will result in a decrease in the area of the battery attachment/detachment opening. Thus, a decrease in the rigidity of the main member due to the presence of the battery attachment/detachment opening will be restricted. Further, since a decrease in the rigidity of the main member is restricted, the thickness of the main member does not need to be increased. Thus, an increase in the weight of the main member will be restricted.

Note that the battery frontward direction includes not only a direction parallel to the vehicle frontward direction but also a direction inclined with respect to the vehicle frontward direction. In the case where the moving distance in the direction orthogonal to the battery frontward direction is smaller than the moving distance in the battery frontward direction, the battery is moving in the battery frontward direction. The same applies to the battery backward direction, the battery upward direction and the battery downward direction.

Note that the main member may have a frame structure, a monocoque structure, or a semi-monocoque structure.

A straddled electric vehicle of a second aspect is configured such that, in the straddled electric vehicle of the first aspect,
a length of the battery in a battery up-down direction as seen in the battery frontward or backward direction is smaller than a length of the battery in a battery front-back direction as seen in the battery upward or downward direction.

Moreover, according to the straddled electric vehicle of the second aspect, it is possible to more effectively restrict a decrease in the rigidity of the main member in which the battery housing space for housing the battery is formed. To be more specific, in the straddled electric vehicle of the second aspect, the length of the battery in the battery up-down direction as seen in the battery frontward or backward direction is smaller than the length of the battery in the battery front-back direction as seen in the battery upward or downward direction. Therefore, the battery seen in the battery frontward or backward direction tends to be smaller than the battery seen in the battery upward or downward direction. The battery attachment/detachment opening has a shape that permits the battery to pass in the battery frontward or backward direction, and prevents the battery from passing in the battery upward or downward direction. That is, the battery attachment/detachment opening has a shape that permits the battery to pass in a direction where a shape of the battery tends to be relatively small, and prevents the battery from passing in a direction where a shape of the battery tends to be relatively large. Therefore, the battery attachment/detachment opening tends to be small. As a result, according to the straddled electric vehicle of the second aspect, it is possible to more effectively restrict a decrease in the rigidity of the main member.

A straddled electric vehicle of a third aspect is configured such that, in the straddled electric vehicle according to the first or second aspect,
the main member includes a lid for covering the battery attachment/detachment opening.

The straddled electric vehicle of the third aspect includes a lid for covering the battery attachment/detachment opening. Therefore, deforming of the battery housing part is restricted by the cover. As a result, according to the straddled electric vehicle of the third aspect, it is possible to more effectively restrict a decrease in the rigidity of the main member in which the battery housing space for housing the battery is formed.

A straddled electric vehicle of a fourth aspect is configured such that, in the straddled electric vehicle according to any of the first to third aspects,
the power unit is disposed below the battery in a vehicle-body downward direction.

According to the straddled electric vehicle of the fourth aspect, a heavy object is located closer to a center of the straddled electric vehicle in the vehicle-body front-back direction. To be more specific, the battery is disposed between the front axle which is a rotational center of that front wheel, among the one or more front wheels, that is located most backward, and the rear axle which is a rotational center of that rear wheel, among the one or more rear wheels, that is located most frontward in the vehicle-body front-back direction when the vehicle body is seen in the downward direction. Therefore, the battery is disposed near the center of the straddled electric vehicle in the vehicle-body front-back direction. The power unit is disposed below the battery in the vehicle-body downward direction. The position of the power unit in the vehicle-body front-back direction and the position of the battery in the vehicle-body front-back direction are close to each other. The power unit and the battery are heavy articles in the straddled electric vehicle. As a result, in the straddled electric vehicle of the fourth aspect, the heavy articles will be brought closer to the center of the straddled electric vehicle in the vehicle-body front-back direction.

A straddled electric vehicle of a fifth aspect is configured such that, in the straddled electric vehicle according to any of the first to fourth aspects,
a bottom face of the battery does not have a portion which is located above the main member in the vehicle-body upward direction as seen in a vehicle-body leftward or rightward direction.

According to the straddled electric vehicle of the fifth aspect, the bottom face of the battery does not have a portion which is located above the main member in the vehicle-body upward direction as seen in the vehicle-body leftward or rightward direction. As a result, the battery will be located further downward in the vehicle-body downward direction.

A straddled electric vehicle of a sixth aspect is configured such that, in the straddled electric vehicle according to the fifth aspect,
the battery does not have a portion which is located above the main member in the vehicle-body upward direction as seen in the vehicle-body leftward or rightward direction.

In the straddled electric vehicle of the sixth aspect, the battery does not have a portion which is located above the main member in the vehicle-body upward direction as seen in the vehicle-body leftward or rightward direction. As a result, the battery will be located further downward in the vehicle-body downward direction.

A straddled electric vehicle of a seventh aspect is configured such that, in the straddled electric vehicle according to any of the first to sixth aspects,
the battery housing part includes a battery-housing-part left-side-face part that is to be brought into contact with the battery from the left of the vehicle body, and a battery-housing-part right-side-face part that is to be brought into contact with the battery from the right of the vehicle body.

According to the straddled electric vehicle of the seventh aspect, the battery becomes less likely to displace with respect to the main member. To be more specific, in the straddled electric vehicle of the seventh aspect, the battery housing part includes a battery-housing-part left-side-face part that is to be brought into contact with the battery from the left of the vehicle body, and a battery-housing-part right-side-face part that is to be brought into contact with the battery from the right of the vehicle body. As a result, the left face of the battery will be supported by the battery-housing-part left-side-face part. Moreover, the right face of the battery becomes supported by the battery-housing-part right-side-face part. As a result, the battery becomes less likely to displace in the vehicle-body leftward or rightward direction with respect to the main member.

According to the straddled electric vehicle of the first aspect, it is possible to decrease the length of the battery attachment/detachment opening in the vehicle-body front-back direction. To be more specific, the battery attachment/detachment opening is located above the battery in the vehicle-body upward direction. Further, the front end of the battery attachment/detachment opening is located further backward in the vehicle-body backward direction than the front end of the battery. Therefore, a user inserts the battery in the battery housing part by moving the battery in the vehicle-body lower-front direction with the front face of the battery being kept to face in the vehicle-body lower-front direction. Thereafter, the user has the battery housed in the battery housing part by rotating the battery in a clockwise manner around the lower end of the front face of the battery as seen in the vehicle-body rightward direction. At this moment, the lower end of the front face of the battery is located further frontward in the vehicle-body frontward direction than the front end of the battery attachment/detachment opening. Therefore, even when the length of the battery attachment/detachment opening in the vehicle-body front-back direction is smaller than the length of the bottom face of the battery in the vehicle-body front-back direction, the rear end of the bottom face of the battery can pass through the battery attachment/detachment opening. As a result, according to the straddled electric vehicle of the first aspect, it is possible to decrease the length of the battery attachment/detachment opening in the vehicle-body front-back direction.

According to the straddled electric vehicle of the first aspect, the battery attachment/detachment opening and the upper face of the battery have similar shapes as seen in the vehicle-body leftward or rightward direction. As a result, it becomes possible to bring the battery attachment/detachment opening and the upper face of the battery closer to each other.

The above described purposes and other purposes, features, aspects, and benefits of the present invention will become further apparent from the following detailed description of embodiments of the present invention which is to be presented in relation to the appended drawings.

As used herein, the term "and/or" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In the following description, for purposes of explanation, numerous specific details are set forth in order to provide a thorough understanding of the present invention. It will be evident, however, to one skilled in the art that the present invention may be practiced without these specific details. The present disclosure is to be considered as an exemplification of the invention, and is not intended to limit the invention to the specific embodiments illustrated by the figures or description below. The scope of the present invention is defined by the appended claims.

### EFFECTS OF INVENTION

The present invention can restrict a decrease in the rigidity of the main member in which the battery housing space for housing the battery is formed, and an increase in the weight of the main member.

### BRIEF DESCRIPTION OF DRAWINGS

[FIG. 1] FIG. 1 is a view of the straddled electric vehicle 1 as seen in the straddled-electric-vehicle 1 rightward direction, and a perspective view of a vehicle body 2 and a battery 9 of the straddled electric vehicle 1.
[FIG. 2] FIG. 2 is an exploded perspective view of the vehicle body 2 and a shock absorber 62.
[FIG. 3] FIG. 3 is a top view of the vehicle body 2.
[FIG. 4] FIG. 4 is a sectional view taken along X-X in FIG. 2.
[FIG. 5] FIG. 5 is an exploded perspective view of the vehicle body 2 and the control apparatus 10.
[FIG. 6] FIG. 6 is a perspective view of the vehicle body 2.
[FIG. 7] FIG. 7 is a diagram to show a process in which the battery 9 is attached to the vehicle body 2.
[FIG. 8] FIG. 8 is a diagram to show a process in which the battery 9 is attached to the vehicle body 2.
[FIG. 9] FIG. 9 is a diagram to show a process in which the battery 9 is attached to the vehicle body 2.

### DESCRIPTION OF EMBODIMENTS

### [General configuration]

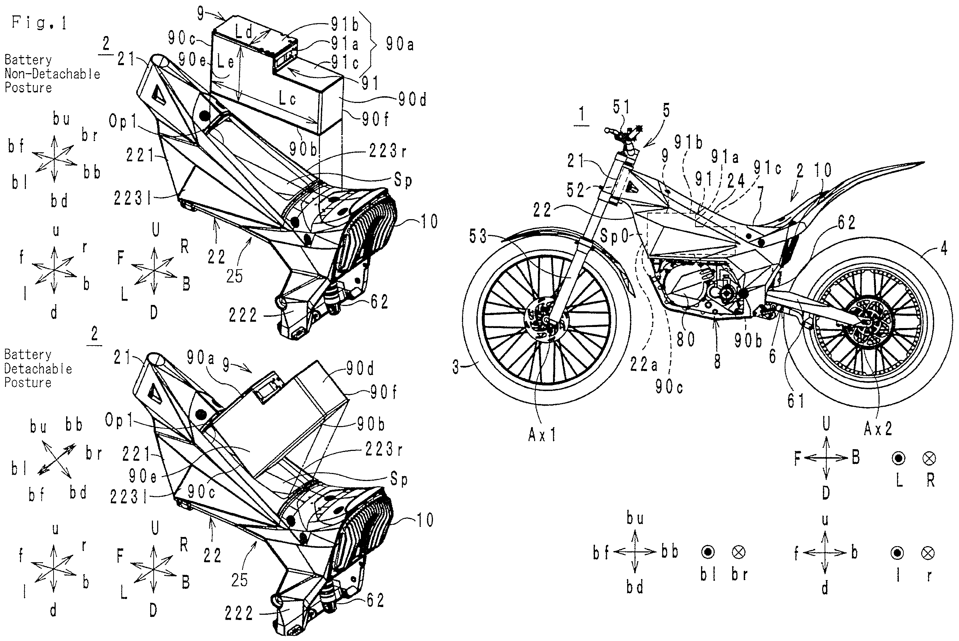

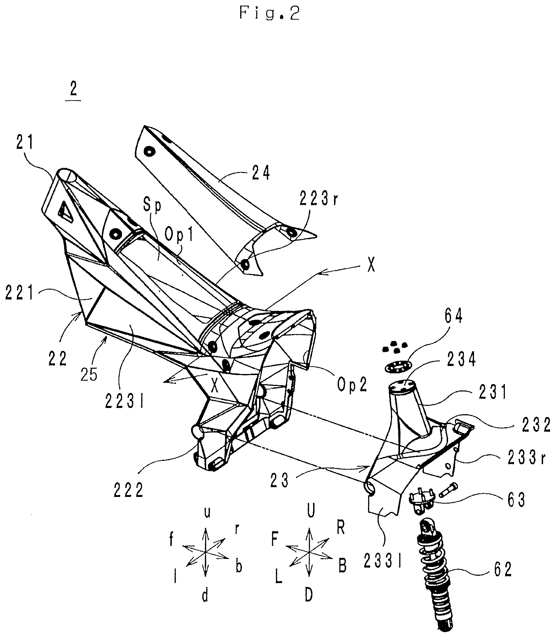

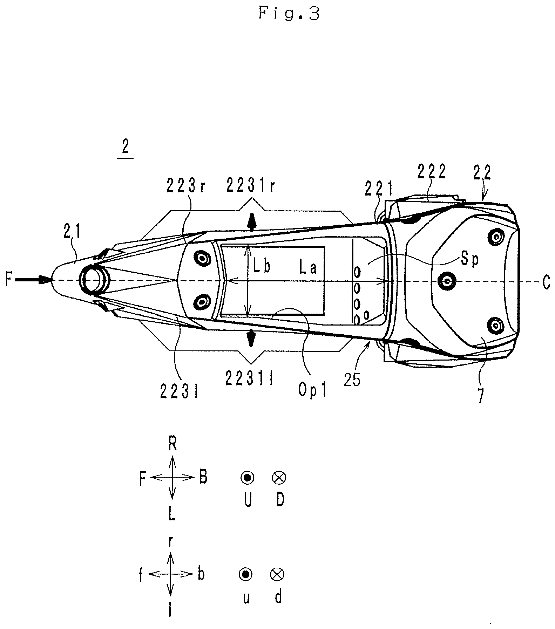

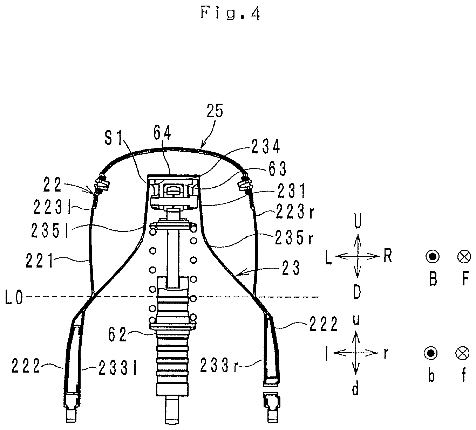

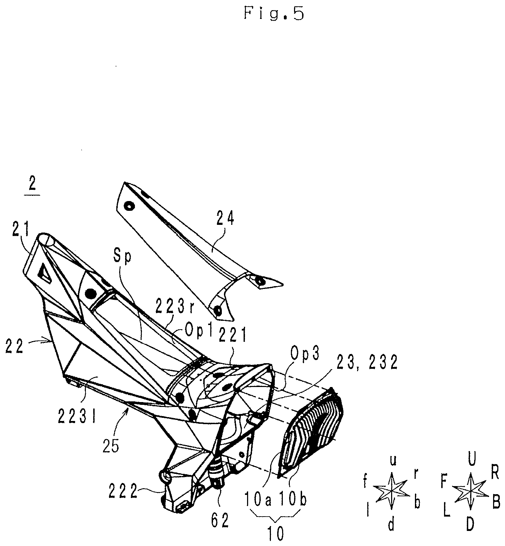

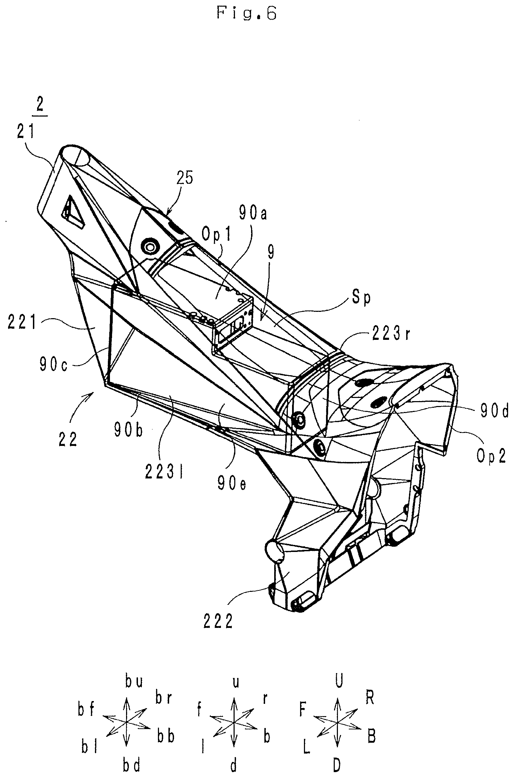

Hereinafter, a general configuration of a straddled electric vehicle according to one embodiment of the present invention will be described with reference to the drawings. In the present embodiment, as an example of the straddled electric vehicle, a two-wheel leaning vehicle including a vehicle body which is capable of leaning, a front wheel, and a rear wheel will be exemplified. The straddled electric vehicle is a vehicle for motorcycle trials. FIG. 1 is a view of a straddled electric vehicle 1 as seen in the straddled-electric-vehicle 1 rightward direction, and a perspective view of a vehicle body 2 and a battery 9 of the straddled electric vehicle 1. FIG. 2 is an exploded perspective view of the vehicle body 2 and a shock absorber 62. FIG. 3 is a top view of the vehicle body 2. FIG. 4 is a sectional view taken along X-X in FIG. 2. FIG. 5 is an exploded perspective view of the vehicle body 2 and the control apparatus 10. FIG. 6 is a perspective view of the vehicle body 2. In FIG. 6, the battery 9 is housed in the vehicle body 2.

Hereinafter, the straddled-electric-vehicle 1 frontward direction is referred to as a frontward direction "F". The straddled-electric-vehicle 1 backward direction is referred to as a backward direction "B". The straddled-electric-vehicle 1 leftward direction is referred to as a leftward direction "L". The straddled-electric-vehicle 1 rightward direction is referred to as a rightward direction "R". The straddled-electric-vehicle 1 upward direction is referred to as an upward direction "U". The straddled-electric-vehicle 1 downward direction is referred to as a downward direction "D". The straddled-electric-vehicle 1 front-back direction is referred to as a front-back direction "FB". The straddled-electric-vehicle 1 left-right direction is referred to as a left-right direction "LR". The straddled-electric-vehicle 1 up-down direction is referred to as an up-down direction "UD". The straddled-electric-vehicle 1 frontward direction refers to a frontward direction when taking a rider who is astride the straddled electric vehicle 1 as a reference. The straddled-electric-vehicle 1 backward direction refers to a backward direction when taking a rider who is astride the straddled electric vehicle 1 as a reference. The straddled-electric-vehicle 1 leftward direction refers to a leftward direction when taking a rider who is astride the straddled electric vehicle 1 as a reference. The straddled-electric-vehicle 1 rightward direction refers to a rightward direction when taking a rider who is astride the straddled electric vehicle 1 as a reference. The straddled-electric-vehicle 1 upward direction refers to an upward direction when taking a rider who is astride the straddled electric vehicle 1 as a reference. The straddled-electric-vehicle 1 downward direction refers to a downward direction when taking a rider who is astride the straddled electric vehicle 1 as a reference.

Further, in the straddled electric vehicle 1, the vehicle body 2 can lean in the leftward direction L or the rightward direction R. In a case where the vehicle body 2 leans in the leftward direction L or rightward direction R, the vehicle-body 2 up-down and left-right directions do not match the straddled-electric-vehicle 1 up-down direction UD and left-right directions LR, respectively. On the other hand, the vehicle-body 2 up-down and left-right directions in an upright state match the straddled-electric-vehicle 1 up-down direction UD and left-right direction LR, respectively. Hereinafter, the vehicle-body 2 frontward direction is referred to as a frontward direction "f". The vehicle-body 2 backward direction is referred to as a backward direction "b". The vehicle-body 2 leftward direction is referred to as a leftward direction "l". The vehicle-body 2 rightward direction is referred to as a rightward direction "r". The vehicle-body 2 upward direction is referred to as an upward direction "u". The vehicle-body 2 downward direction is referred to as a downward direction "d". The vehicle-body 2 front-back direction is referred to as a front-back direction "fb". The vehicle-body 2 left-right direction is referred to as a left-right direction "lr". The vehicle-body 2 up-down direction is referred to as an up-down direction "ud".

Moreover, the battery 9 frontward direction is referred to as a frontward direction "bf". The battery 9 backward direction is referred to as a backward direction "bb". The battery 9 leftward direction is referred to as a leftward direction "bl". The battery rightward direction is referred to as a rightward direction "br". The battery 9 upward direction is referred to as an upward direction "bu". The battery 9 downward direction is referred to as a downward direction "bd". The battery 9 front-back direction is referred to as a front-back direction "bfb". The battery 9 left-right direction is referred to as a left-right direction "blr". The battery 9 up-down direction is referred to as an up-down direction "bud". Each direction in the battery 9 is based on a state in which the battery 9 is placed on the vehicle body 2.

In the present specification, an axis line or a member extending in the front-back direction does not necessarily refer to only an axis line or a member that is parallel with the front-back direction. An axis line or a member extending in the front-back direction refers to an axis line or a member that is inclined within a range of ±45° with respect to the front-back direction. Similarly, herein, an axis line or a member extending in the up-down direction refers to an axis line or a member that is inclined within a range of ±45° with respect to the up-down direction. Likewise, an axis line or a member extending in the left-right direction refers to an axis line or a member that is inclined within a range of ±45° with respect to the left-right direction. Further, the term "an upright state of the vehicle body 2" means a state in which the front wheel is neither steered nor leaned, without a rider riding on and without fuel loaded in the straddled electric vehicle 1.

When any two members in the present specification are defined as a first member and a second member, the relationship between the any two members has the following meaning. Note that the first member and the second member mean members constituting the straddled electric vehicle 1.

In the present specification, the phrase "a first member is supported by a second member" includes a case in which the first member is attached to the second member so as to be immovable with respect to the second member (that is, is secured thereto), and a case in which the first member is attached to the second member so as to be movable with respect to the second member. Further, the phrase "the first member is supported by the second member" includes both of a case in which the first member is directly attached to the second member, and a case in which the first member is attached to the second member via a third member.

In the present specification, the phrase "the first member and the second member which are aligned in the front-back direction" shows the following state. That is a state in which when the first member and the second member are seen in a direction perpendicular to the front-back direction, both of the first member and the second member are disposed on any straight line extending in the front-back direction. In the present specification, the phrase "the first member and the second member which are aligned in the front-back direction as seen in the upward or downward direction" shows the following state. That is a state in which when the first member and the second member are seen in the upward or downward direction, both of the first member and the second member are disposed on any straight line extending in the front-back direction. In this case, when the first member and the second member are seen in the leftward or rightward direction which is different from the up-down direction, either one of the first member and the second member may not be disposed on any straight line extending in the front-back direction. Note that the first member and the second member may be in contact with each other. The first member and the second member may also be apart from each other. A third member may be present between the first member and the second member. This definition will be applied to directions other than the front-back direction.

In the present specification, the phrase "the first member is disposed further forward than the second member" shows the following state. The first member is disposed in front of a plane which passes through the front end of the second member and is orthogonal to the front-back direction. In this case, the first member and the second member may be aligned in the front-back direction, and may not be aligned. This definition will apply to directions other than the front-back direction.

In the present specification, the phrase "the first member is disposed in front of the second member" shows the following state. At least a part of the first member is disposed in a region through which the second member passes when moving forward in parallel. Thus, the first member may be accommodated in the region through which the second member passes when moving forward in parallel, or protrudes from the region through which the second member passes when moving forward in parallel. In this case, the first member and the second member are aligned in the front-back direction. This definition will be applied to directions other than the front-back direction.

In the present specification, the phrase "the first member is disposed in front of the second member as seen in the leftward or rightward direction" shows the following state. The first member and the second member are aligned in the front-back direction as seen in the leftward or rightward direction, and a part of the first member opposed to the second member is disposed in front of the second member as seen in the leftward or rightward direction. In this definition, the first member and the second member may not be aligned in the front-back direction in a three dimensional space. This definition will be applied to directions other than the front-back direction.

In the present specification, unless otherwise stated, each part of the first member is defined as follows. Note that the first member means a member constituting the straddled electric vehicle 1. A front part of the first member means a front half of the first member. A rear part of the first member means a back half of the first member. A left part of the first member means a left half of the first member. A right part of the first member means a right half of the first member. An upper part of the first member means an upper half of the first member. A lower part of the first member means a lower half of the first member. The upper end of the first member means an end of the first member in the upward direction. The lower end of the first member means an end of the first member in the downward direction. The front end of the first member means an end of the first member in the frontward direction. The rear end of the first member means an end of the first member in the backward direction. The left end of the first member means an end of the first member in the leftward direction. The right end of the first member means an end of the first member in the rightward direction. The upper end part of the first member means the upper end and its vicinity of the first member. The lower end part of the first member means the lower end and its vicinity of the first member. The front end part of the first member means the front end and its vicinity of the first member. The rear end part of the first member means the rear end and its vicinity of the first member. The left end part of the first member means the left end and its vicinity of the first member. The right end part of the first member means the right end and its vicinity of the first member.

In the present specification, the phrase "a component (member, space, or opening) is formed (located or provided) between the first member and the second member" means that the component is present between the first member and the second member in a direction in which the first member and the second member are aligned. However, the component may protrude or may not protrude from the first member or the second member in a direction orthogonal to the direction in which the first member and the second member are aligned.

As shown in FIG. 1, a straddled electric vehicle 1 includes a vehicle body 2, a front wheel 3, a rear wheel 4, a steering mechanism 5, a suspension 6, a seat 7, a power unit 8, a battery 9, and a control apparatus 10. The vehicle body 2 leans in the leftward direction L when it turns to the leftward direction L. The vehicle body 2 leans in the rightward direction R when it turns to the rightward direction R. The vehicle body 2 supports the front wheel 3 and the rear wheel 4 as the plurality of wheels. The vehicle body 2 includes fiber-reinforced resins in which resin (for example, epoxy resin, vinyl ester, phenol resin, polyamide, polypropylene, polyphenylene sulfide, etc.) is reinforced by fibers (for example, carbon fiber, glass fiber, etc.) In other words, the vehicle body 2 includes a portion formed of the fiber reinforced resin. In the present embodiment, the vehicle body 2 is formed of a carbon fiber-reinforced resin in which resin is reinforced by a fiber sheet including carbon fibers. The vehicle body 2 supports the front wheel 3, the rear wheel 4, the steering mechanism 5, the suspension 6, the seat 7, the power unit 8, the battery 9, and the control apparatus 10. The vehicle body 2 includes a main member 25 as shown in FIG. 2. The main member 25 is subjected to load from at least one wheel of the plurality of wheels (the front wheel 3 and the rear wheel 4). The rider of the straddled electric vehicle 1 straddles the main member 25 when driving the straddled electric vehicle 1. The main member 25 includes a steering-mechanism supporting part 21, a battery housing part 22 as a main-member body part, a shock-absorber attachment part 23, and a lid part 24.

The steering-mechanism supporting part 21 supports the steering mechanism 5 as described below. The steering-mechanism supporting part 21 is a head pipe. The steering-mechanism supporting part 21 is disposed at a front end part of the vehicle body 2. The steering-mechanism supporting part 21 is a cylinder having a center axis extending in the up-down direction ud. The steering-mechanism supporting part 21 is disposed slightly inclined with respect to the up-down direction ud such that an upper end part of the steering-mechanism supporting part 21 is located further backward than a lower end part of the steering-mechanism supporting part 21 as seen in the leftward direction 1 or the rightward direction r.

The battery housing part 22 forms, as shown in FIG. 1, a battery housing space Sp for housing the battery 9. The battery housing part 22 is disposed behind the steering-mechanism supporting part 21 as seen from above, that is, as seen in the downward direction d. The steering-mechanism supporting part 21 and the battery housing part 22 are formed as a single member. The phrase "a plurality of structures are formed as a single member" means that a plurality of structures are formed by a single die. The battery housing part 22 has a shape which is obtained by rotating a letter L clockwise by 90° as seen in the leftward direction 1. The battery housing part 22 includes a battery-housing-part upper part 221 and a battery-housing-part lower part 222. The battery-housing-part upper part 221 forms, as shown in FIG. 2, the battery housing space Sp extending in the front-back direction fb along with a shock-absorber attachment part 23 to be described below, the lid part 24, and the control apparatus 10. The battery housing space Sp is located further backward than a front axle Ax1 to be described below and further forward than a rear axle Ax2 to be described below as seen from above, that is, as seen in the downward direction d. The battery housing space Sp is a sealed space. The battery-housing-part upper part 221 is a portion that contributes to formation of the battery housing space Sp in the battery housing part 22.

The battery-housing-part lower part 222 extends in the downward direction d from a rear part of the battery-housing-part upper part 221. The battery-housing-part lower part 222 is a portion that does not contribute to formation of the battery housing space Sp.

Further, as shown in FIG. 3, a battery attachment/detachment opening Op1 is provided in the upper face of the battery-housing-part upper part 221. That is, the battery-housing-part upper part 221 is formed with the battery attachment/detachment opening Op1. The battery attachment/detachment opening Op1 is disposed between the front wheel 3 (in more detail below) and the rear wheel 4 (in more detail below) in the front-back direction fb. The battery attachment/detachment opening Op1 has, as shown in FIG. 3, a rectangular shape having a long side extending in the front-back direction fb and a short side extending in the left-right direction lr as seen from above, that is, as seen in the downward direction d. The length of the long side of the battery attachment/detachment opening Op1 is La. The length of the short side of the battery attachment/detachment opening Op1 is Lb. Moreover, as shown in FIG. 1, the front end of the battery attachment/detachment opening Op1 is located further upward than the rear end of the battery attachment/detachment opening Op1. The battery attachment/detachment opening Op1 connects the battery housing space Sp with the external space which is a space around the main member 25.

Moreover, as shown in FIG. 2, an opening Op2 is provided in the rear end part of the battery housing part 22. As a result, the opening Op2 connects the battery housing space Sp with the external space which is a space around the main member 25.

The lid part 24 covers the battery attachment/detachment opening Op1 by being attached to the upper face of the battery housing part 22. The lid part 24 has a structure which is detachable to the battery housing part 22. In the present embodiment, the lid part 24 is secured to the battery housing part 22 with four screws.

The shock-absorber attachment part 23 supports, as shown in FIG. 2, an upper end part of a shock absorber 62 to be described below. The shock-absorber attachment part 23 is not formed as a single member with the battery housing part 22. That is, the shock-absorber attachment part 23 is a member different from the battery housing part 22.

The shock-absorber attachment part 23 includes a tube part 231, a bottom face part 232, a left-side-face-part supported part 2331, a right-side-face-part supported part 233r, and an attachment surface part 234. The tube part 231 has a cylindrical shape which has an axis line extending in the up-down direction ud as seen in the frontward direction f or the backward direction b. The axis line of the tube part 231 is slightly inclined with respect to the up-down direction ud such that a portion that passes through the upper end of the tube part 231 is located further forward in the frontward direction than a portion which passes through the lower end of the tube part 231, as seen in the leftward direction 1 or the rightward direction r.

Moreover, the tube part 231 has an annular shape in a section orthogonal to the center axis. The term "annular" means a shape which connects over the entire perimeter without any break, such as a circle, an ellipse, a rectangle, etc. Therefore, in the shock-absorber attachment part 23, a portion which does not form an annular shape in a section orthogonal to the center axis is not the tube part 231. In FIG. 4, the tube part 231 is a portion located above the straight line L0 in the shock-absorber attachment part 23. Further, the diameter of the tube part 231 is not uniform. The diameter of the tube part 231 gradually increases from its upper end toward its lower end.

The attachment surface part 234 is provided at the upper end of the tube part 231. The attachment surface part 234 covers the opening located at the upper end of the tube part 231. Therefore, the attachment surface part 234 has a disc shape. The attachment surface part 234 has, as shown in FIG. 4, an attachment surface S1 which faces in the downward direction d.

The bottom face part 232 is provided at the lower end part of the tube part 231. The bottom face part 232 extends from the lower end part of the tube part 231 in the backward direction b. The bottom face part 232 has a plate shape. As a result, the bottom face part 232 has an upper face which faces in the upward direction u.

The left-side-face-part supported part 2331 extends from the left part of the lower end part of the tube part 231 and the left part of the bottom face part 232 in the downward direction d. Therefore, the left-side-face-part supported part 2331 is located further downward and leftward than the attachment surface part 234. The left-side-face-part supported part 2331 is a portion located further downward than the tube part 231 and the bottom face part 232 in the shock-absorber attachment part 23. In FIG. 4, the left-side-face-part supported part 2331 is a portion located below the straight line L0 in the shock-absorber attachment part 23. The left-side-face-part supported part 2331 has a face facing in the left-upper direction lu and a face facing in the leftward direction 1.

The right-side-face-part supported part 233r extends from the right part of the lower end part of the tube part 231 and the right part of the bottom face part 232 in the downward direction d. Therefore, the right-side-face-part supported part 233r is located further downward and rightward than the attachment surface part 234. The right-side-face-part supported part 233r is a portion located further downward than the tube part 231 and the bottom face part 232 in the shock-absorber attachment part 23. In FIG. 4, the right-side-face-part supported part 233r is a portion located below the straight line L0 in the shock-absorber attachment part 23. The right-side-face-part supported part 233r has a face facing in the right-upper direction ru and a face facing in the rightward direction r.

The shock-absorber attachment part 23 having the above described configuration includes, as shown in FIG. 4, an attachment surface part 234, a shock-absorber-attachment-part left-side-face part 2351, and a shock-absorber-attachment-part right-side-face part 235r as seen in the frontward direction f or the backward direction b. The shock-absorber-attachment-part left-side-face part 2351 extends in the downward direction d from the attachment surface S1 to a location further leftward in the left-right direction lr than the center of the attachment surface S1. In the present embodiment, the shock-absorber-attachment-part left-side-face part 2351 extends in the downward direction d from the left end of the attachment surface part 234. The shock-absorber-attachment-part left-side-face part 2351 includes a part of the left part of the tube part 231 and the left-side-face-part supported part 2331.

The shock-absorber-attachment-part right-side-face part 235r extends in the downward direction d from the attachment surface S1 to a location further rightward in the left-right direction lr than the center of the attachment surface S1. In the present embodiment, the shock-absorber-attachment-part right-side-face part 235r extends in the downward direction d from the right end of the attachment surface part 234. The shock-absorber-attachment-part right-side-face part 235r includes a part of the right part of the tube part 231 and the right-side-face-part supported part 233r. As a result, the attachment surface part 234, the shock-absorber-attachment-part left-side-face part 2351, and the shock-absorber-attachment-part right-side-face part 235r have a U-shape which is inverted upside down.

Moreover, the fibers of the attachment surface part 234 extend in the left-right direction lr. Therefore, the fiber direction of the attachment surface part 234 is the left-right direction lr. The fibers of the shock-absorber-attachment-part left-side-face part 2351 extend in the up-down direction ud. The fiber direction of the shock-absorber-attachment-part left-side-face part 2351 is the up-down direction ud. The fibers of the shock-absorber-attachment-part right-side-face part 235r extend in the up-down direction ud. The fiber direction of the shock-absorber-attachment-part right-side-face part 235r is the up-down direction ud. The fiber direction means the longitudinal direction of a fiber. In a fiber sheet which is formed in a sheet shape by using fibers, the longitudinal direction of a fiber included in the fiber sheet corresponds to the fiber direction. In the case of a sheet-like member in which fibers are disposed in an intersecting manner, each of the directions of the intersecting fibers is referred to as the fiber direction.

The shock-absorber attachment part 23 configured as described above is attached to the rear part of the battery-housing-part upper part 221 and the battery-housing-part lower part 222. More precisely, the left part of the battery-housing-part lower part 222 supports the left-side-face-part supported part 2331. The face facing in the leftward direction 1 and the face facing in the left-upper direction lu of the left-side-face-part supported part 2331 is secured respectively to the face facing in the rightward direction r and the face facing in the right-lower direction rd with an adhesive at the left part of the battery-housing-part lower part 222. Moreover, the right part of the battery-housing-part lower part 222 supports the right-side-face-part supported part 233r. The face facing in the rightward direction r and the face facing in the right-upper direction ru of the right-side-face-part supported part 233r are secured respectively to the face facing in the leftward direction 1 and the face facing in the left-lower direction ld with an adhesive at the right part of the battery-housing-part lower part 222. As a result, as shown in FIG. 5, the opening Op3 is formed in the rear end part of the battery-housing-part upper part 221. The opening Op3 is formed by being surrounded by the left part of the battery-housing-part upper part 221, the right part of the battery-housing-part upper part 221, and the bottom face part 232. Therefore, the opening Op3 is a portion which is located above the bottom face part 232 in the opening Op2 (see FIG. 2).

The vehicle body 2 as described so far includes the vehicle-body left part 2231 and the vehicle-body right part 223r as shown in FIG. 3. The vehicle-body left part 2231 is a portion which is located further leftward than the center (center line C) in the left-right direction lr of the vehicle body 2. Therefore, the vehicle-body left part 2231 includes a left part of the steering-mechanism supporting part 21, a left part of the battery-housing-part upper part 221, a left part of the battery-housing-part lower part 222, a left part of the shock-absorber attachment part 23, and a left part of the lid part 24 (not shown in FIG. 3). The vehicle-body right part 223r is a portion which is located further rightward than the center (center line C) in the left-right direction lr of the vehicle body 2. Therefore, the vehicle-body right part 223r includes a right part of the steering-mechanism supporting part 21, a right part of the battery-housing-part upper part 221, a right part of the battery-housing-part lower part 222, a right part of the shock-absorber attachment part 23, and a right part of the lid part 24 (not shown in FIG. 3). Such a vehicle body 2 forms a battery housing space Sp extending in the front-back direction fb between the vehicle-body left part 2231 and the vehicle-body right part 223r. Moreover, the battery attachment/detachment opening Op1 is located, as shown in FIG. 3, between the vehicle-body left part 2231 and the vehicle-body right part 223r as seen from above, that is, as seen in the downward direction d.

The battery 9 is a power source of the straddled electric vehicle 1. The battery 9 is a secondary battery, for example, a lithium ion battery. The battery 9 has a cuboid shape as shown in FIG. 1. Therefore, the battery 9 has an upper face 90a, a bottom face 90b, a front face 90c, a back face 90d, a left face 90e, and a right face 90f. The upper face 90a is an upper face of the battery 9 when the battery 9 is placed on the vehicle body 2. The bottom face 90b is a bottom face of the battery 9 when the battery 9 is placed on the vehicle body 2. The bottom face 90b is brought into contact with the vehicle body 2 when the battery 9 is placed on the vehicle body 2. The front face 90c is a front face of the battery 9 when the battery 9 is placed on the vehicle body 2. The back face 90d is a back face of the battery 9 when the battery 9 is placed on the vehicle body 2. The left face 90e is a left face of the battery 9 when the battery 9 is placed on the vehicle body 2. The right face 90f is a right face of the battery 9 when the battery 9 is placed on the vehicle body 2. The length of the long side of the bottom face 90b of the battery 9 is Lc. The length of the short side of the bottom face 90b of the battery 9 is Ld. The length of the long side of the front face 90c of the battery 9 is Le. And, a relationship of Lc > Le > Ld holds.

Moreover, a step 91 is provided in the upper face 90a of the battery 9. Therefore, the upper face 90a includes a connection surface 91a and upper face parts 91b, 91c. The connection surface 91a extends in the up-down direction bud as seen in the leftward direction bl or the rightward direction br. The connection surface 91a faces in the backward direction bb. The upper face part 91b is a front part of the upper face 90a. The upper face part 91b extends in the frontward direction bf from the upper end of the connection surface 91a as seen in the leftward direction bl or the rightward direction br. The upper face part 91c is a rear part of the upper face 90a. The upper face part 91c extends in the backward direction bb from the lower end of the connection surface 91a as seen in the leftward direction bl or the rightward direction br. As a result, the battery 9 has a shape in which the upper end of the front end part of the battery 9 is located further upward than the upper end of the rear end part of the battery 9 when the battery 9 is disposed in the battery housing space Sp. The battery 9 has an L shape as seen in the rightward direction br. Moreover, the connection surface 91a is provided with a connector (not shown) for connecting a cable for charging/discharging the battery 9.

The battery 9 is housed in the battery housing space Sp formed by the battery housing part 22 as shown in FIG. 6. Therefore, the bottom face 90b of the battery 9 does not have a portion located above the vehicle body 2 as seen in the leftward direction 1 or the rightward direction r as shown in FIG. 1. That is, the bottom face 90b of the battery 9 does not protrude upwardly from the vehicle body 2 as seen in the leftward direction 1 or the rightward direction r. In other words, the bottom face 90b of the battery 9 is located further downward than an upper edge of the vehicle body 2 as seen in the leftward direction 1 or the rightward direction r. The upper edge of the vehicle body 2 is a portion in contact with a space located above the vehicle body 2 between the front end of the vehicle body 2 and the rear end of the vehicle body 2 as seen in the leftward direction 1 or the rightward direction r.

Further, the battery 9 does not have a portion located above the vehicle body 2 as seen in the leftward direction 1 or the rightward direction r. That is, the battery 9 does not protrude upwardly from the vehicle body 2 as seen in the leftward direction 1 or the rightward direction r. In other words, the battery 9 is located further downward in the downward direction d than the upper edge of the vehicle body 2 as seen in the leftward direction 1 or the rightward direction r.

The battery 9 as described so far is supported by the battery housing part 22. The battery housing part 22 includes, as shown in FIG. 3, a battery-housing-part left-side-face part 22311 and a battery-housing-part right-side-face part 2231r. The battery-housing-part left-side-face part 22311 is brought into contact with the left face 90e of the battery 9 from the left. The battery-housing-part right-side-face part 2231r is brought into contact with the right face 90f of the battery 9 from the right. The front face 90c of the battery 9 does not come into contact with a battery-housing-part front face 22a as shown in FIG. 1. The battery-housing-part front face 22a is a portion located in front of the front face 90c in the battery housing part 22. The battery-housing-part front face 22a is inclined such that an upper part of the battery-housing-part front face 22a is further forward than a lower part of the battery-housing-part front face 22a. As a result, a battery frontward space Sp0 is formed in front of the battery 9. The battery frontward space Sp0 has a triangular shape as seen in the leftward direction 1 or the rightward direction r.

The relation between the battery 9 and the battery attachment/detachment opening Op1 will be described. The battery attachment/detachment opening Op1 is located, as shown in FIG. 6, further upward than the bottom face 90b of the battery 9 when the battery 9 is housed in the battery housing space Sp. In the present embodiment, the battery attachment/detachment opening Op1 is located above the battery 9 when the battery 9 is housed in the battery housing space Sp as shown in FIG. 6. Therefore, the battery 9 can be visually recognized via the battery attachment/detachment opening Op1 as seen from above, that is, as seen in the downward direction d. The front end of the battery attachment/detachment opening Op1 is located further backward than the front end of the battery 9. Moreover, the rear end of the battery attachment/detachment opening Op1 is located further backward than the rear end of the battery 9. Therefore, the front end of the battery 9 cannot be visually recognized via the battery attachment/detachment opening Op1 as seen from above, that is, as seen in the downward direction d. Moreover, the rear end of the battery 9 is visually recognized via the battery attachment/detachment opening Op1 as seen from above, that is, as seen in the downward direction d.

Further, a rider can attach the battery 9 to the battery housing part 22 via the battery attachment/detachment opening Op1. Further, the rider can detach the battery 9 from the battery housing part 22 via the battery attachment/detachment opening Op1. Therefore, the battery 9 can pass through the battery attachment/detachment opening Op1. The battery attachment/detachment opening Op1 permits the battery 9 to pass in the frontward direction bf or the backward direction bb as shown in FIG. 1. That is, the battery attachment/detachment opening Op1 permits the battery 9 to pass when the battery 9 is to be inserted into the battery attachment/detachment opening Op1 by moving the battery 9 in the frontward direction bf or the backward direction bb. On the other hand, the battery attachment/detachment opening Op1 prevents the battery 9 from passing in the upward direction bu or the downward direction bd as shown in FIG. 1. That is, the battery attachment/detachment opening Op1 does not permit the battery 9 to pass when the battery 9 is to be inserted into the battery attachment/detachment opening Op 1 by moving the battery 9 in the upward direction bu or the downward direction bd.

A shape of the battery 9 seen in the backward direction bb is the same shape as the front face 90c of the battery 9. The front face 90c can fit in the battery attachment/detachment opening Op1. To be specific, the length of the short side of the front face 90c is Ld. The length of the short side of the battery attachment/detachment opening Op1 is Lb. And a relationship of Lb > Ld holds. Further, the length of the long side of the front face 90c is Le. The length of the long side of the battery attachment/detachment opening Op1 is La. And, a relationship of La > Le holds. The battery 9 is disposed, as shown in the perspective view of FIG. 1, such that the left-right direction blr is substantially parallel with the short side of the battery attachment/detachment opening Op1, and the up-down direction bud is substantially parallel with the long side of the battery attachment/detachment opening Op1. This posture of the battery 9 is referred to as a battery detachable posture. In the battery detachable posture, the battery 9 can pass through the battery attachment/detachment opening Op1 by being moved in the front-back direction bfb.

A shape of the battery 9 seen in the upward direction bu is the same shape as the bottom face 90b of the battery 9. The bottom face 90b cannot fit in the battery attachment/detachment opening Op1. To be specific, the length of the long side of the bottom face 90b is Lc. The length of the short side of the battery attachment/detachment opening Op1 is Lb. And a relationship of Lc > Lb holds. The battery 9 is disposed, as shown in the perspective view of FIG. 1, such that the left-right direction blr is substantially parallel with the short side of the battery attachment/detachment opening Op1, and the front-back direction bfb is substantially parallel with the long side of the battery attachment/detachment opening Op1. This posture of the battery 9 is referred to as a battery non-detachable posture. In the battery non-detachable posture, the battery 9 cannot pass through the battery attachment/detachment opening Op1 even when it is moved in the up-down direction bud.

The power unit 8 includes, as shown in FIG. 1, an electric motor 80 and a reduction gear (not shown). The electric motor 80 is supplied with power from the battery 9 and generates driving force. The reduction gear transfers the driving force generated by the electric motor 80 to the rear wheel 4 to be described below. In this way, the power unit 8 causes the rear wheel 4 to be rotated by the driving force generated by the electric motor 80. The power unit 8 is retained by the battery housing part 22. Specifically, the power unit 8 is disposed below the battery housing part 22. And the power unit 8 is retained by the lower face of the battery housing part 22. In this way, the power unit 8 is disposed below the battery 9.

The steering mechanism 5 is disposed around the steering-mechanism supporting part 21. The steering mechanism 5 steers the front wheel 3 according to the operation of a rider. The steering mechanism 5 includes, as shown in FIG. 1, a handlebar 51, a steering shaft 52, and a front fork 53. The handlebar 51 is operated by the rider. The steering shaft 52 is inserted into the steering-mechanism supporting part 21. As a result, the steering shaft 52 is supported by the vehicle body 2 so as to be rotatable around the center axis of the steering shaft 52 by the rider operating the handlebar 51.

The front fork 53 is secured to the lower end part of the steering shaft 52. The front fork 53 has a structure which is branched from the lower end part of the steering shaft 52 to the left and right as seen from front, that is, as seen in the backward direction b. The front wheel 3 is supported at the lower end part of the front fork 53 so as to be rotatable around the front axle Ax1. Therefore, the front wheel 3 is supported by the vehicle body 2 via the steering mechanism 5. The rider can steer the front wheel 3 by operating the handlebar 51. That is, the front wheel 3 is a steerable wheel. Also, the front wheel 3 is disposed in the front part of the straddled electric vehicle 1.

The suspension 6 is supported by the vehicle body 2 and supports the rear wheel 4. The suspension 6 includes a swing arm 61 and a shock absorber 62 as shown in FIG. 1. The swing arm 61 extends in the backward direction b from the battery-housing-part lower part 222 as seen in the rightward direction r. The swing arm 61 is supported by the battery housing part 22 so as to be swingable around the axis passing the front end part of the swing arm 61 in the left-right direction 1r. As a result, the rear end part of the swing arm 61 can move in the up-down direction ud with respect to the battery housing part 22.

The rear wheel 4 is the driving wheel of the straddled electric vehicle 1. Therefore, the rear wheel 4 is rotated by the driving force generated by the power unit 8. The rear wheel 4 is supported by the vehicle body 2 via the swing arm 61. Specifically, the rear wheel 4 is supported at a rear end part of the swing arm 61 so as to be rotatable around the rear axle Ax2. Therefore, the rear wheel 4 can move in the up-down direction ud with respect to the battery housing part 22 as the result of the swing arm 61 swinging. Moreover, the rear wheel 4 is disposed in the rear part of the straddled electric vehicle 1.

A shock absorber 62 supports the rear wheel 4 so as to absorb motion of the rear wheel 4 in the up-down direction ud with respect to the vehicle body 2. The shock absorber 62 is provided behind the battery 9 and in front of the control apparatus 10 to be described below, as shown in FIG. 1. The upper end part of the shock absorber 62 is supported at the vehicle body 2. The straddled electric vehicle 1 further includes a bracket 63 and a plate 64 as shown in FIG. 2. The plate 64 is disposed on the upper face of the attachment surface part 234. The bracket 63 is disposed on the attachment surface S1 of the attachment surface part 234 as shown in FIG. 4. The bracket 63 and the plate 64 are secured to the attachment surface part 234 with a screw. The bracket 63 supports the upper end part of the shock absorber 62 such that the shock absorber 62 can rotate around a shaft extending in the left-right direction lr. In this way, the shock absorber 62 is supported by the vehicle body 2 at the attachment surface part 234 via the bracket 63. The lower end part of the shock absorber 62 is supported by the swing arm 61. In this way, the shock absorber 62 supports the rear wheel 4 via the swing arm 61. The shock absorber 62 is a combination of a damper and a spring, and can expand and contract in the up-down direction ud. The shock absorber 62 absorbs the motion in the up-down direction ud of the rear wheel 4 with respect to the vehicle body 2 by absorbing swinging of the swing arm 61 with respect to the vehicle body 2.

The seat 7 is supported at the rear part of the battery housing part 22. A rider sits on the seat 7. Thereby, the rider straddles the vehicle body 2.

The control apparatus 10 includes a control circuit 10a and a heat sink 10b as shown in FIG. 5. The control circuit 10a is made up of, for example, a circuit board, an IC, and an electronic component. The control circuit 10a controls the electric motor 80 of the power unit 8 based on the operation of the throttle (not shown) by the rider. The control circuit 10a determines the current to be flown through the electric motor 80 based on a throttle signal outputted from a throttle sensor (not shown) for detecting the rotational angle of a right throttle (not shown). The control circuit 10a increases the current to be supplied from the battery 9 to the electric motor 80 as the rotational angle of the right throttle indicated by the throttle signal increases.

The heat sink 10b is attached behind the control circuit 10a. The heat sink 10b dissipates heat generated by the control circuit 10a into the air. The heat sink 10b is secured to the rear end part of the battery-housing-part upper part 221 and the rear end part of the bottom face part 232 so as to cover the opening Op3. In this way, the heat sink 10b covers the opening Op3. The control apparatus 10, the battery housing part 22, the shock-absorber attachment part 23, and the lid part 24 form the battery housing space Sp. The heat sink 10b is made of a metal having excellent heat dissipation and rigidity, such as iron, aluminum, etc.

### [Attaching/detaching of battery]

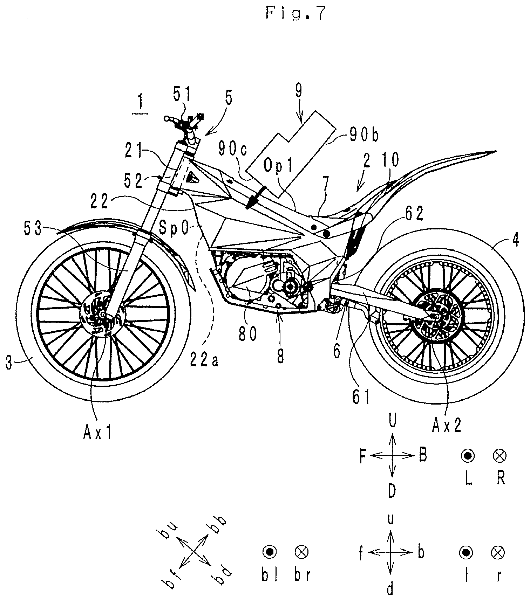

Next, attaching/detaching of the battery to/from the vehicle body 2 will be described with reference to the drawings. FIGS. 7 to 9 show a process in which the battery 9 is attached to the vehicle body 2.

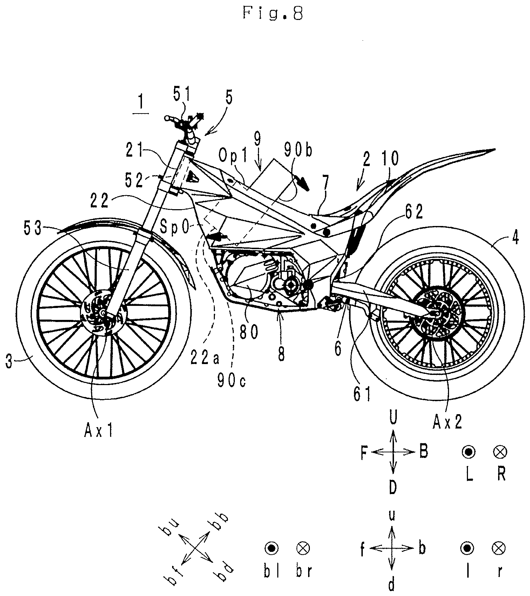

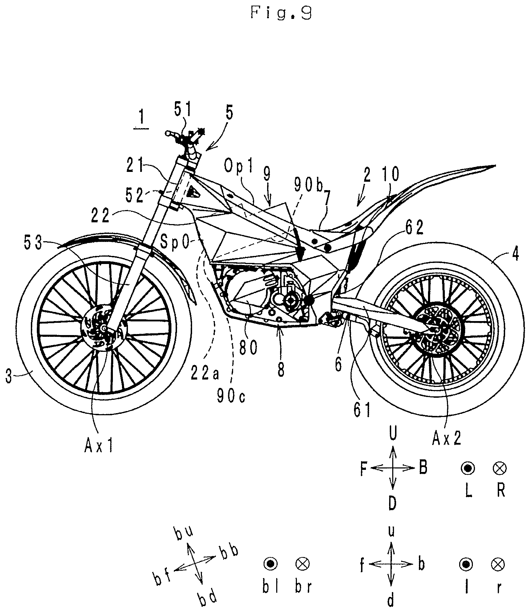

The user holds the battery 9 in the battery detachable posture (see the perspective view of FIG. 1) as shown in FIG. 7. The user moves the battery 9 in the frontward direction bf. As a result, the battery 9 is inserted into the battery housing part 22. Thereafter, the lower end of the front face 90c of the battery 9 is brought into contact with the bottom face of the battery housing part 22 as shown in FIG. 8. The user rotates the battery 9 clockwise around the lower end of the front face 90c of the battery 9 as seen in a rightward direction while sliding the battery 9 in the frontward direction f. As a result, as shown in FIG. 9, the front face 90c of the battery 9 is brought into contact with the battery-housing-part front face 22a. Next, the user rotates the battery 9 clockwise around the lower end of the front face 90c of the battery 9 as seen in the rightward direction. As a result, the bottom face 90b of the battery 9 is brought into contact with the bottom face of the battery housing part 22 as shown in FIG. 1. At this moment, the up-down direction bud corresponds to the up-down direction ud. The left-right direction blr corresponds to the left-right direction lr. The front-back direction bfb corresponds to the front-back direction fb. Finally, the user attaches the lid part 24 to the battery housing part 22. As a result, the battery 9 is attached to the vehicle body 2. Note that since the process in which the battery 9 is detached from the vehicle body 2 is a reversed order of the process in which the battery 9 is attached to the vehicle body 2, description thereof will be omitted.

### [Advantages]

According to the straddled electric vehicle 1, it is possible to restrict a decrease in the rigidity of the vehicle body 2 and an increase in the weight of the vehicle body 2. To be more specific, as shown in FIG. 1, the battery 9 can pass through the battery attachment/detachment opening Op1 when moving in the frontward direction bf or the backward direction bb. Therefore, the user can have the battery 9 housed in the battery housing part 22 via the battery attachment/detachment opening Op1 by moving the battery 9 in the frontward direction bf. Moreover, the user can take out the battery 9 from the battery housing part 22 via the battery attachment/detachment opening Op1 by moving the battery 9 in the backward direction bb. On the other hand, the battery 9 cannot pass through the battery attachment/detachment opening Op1 when moving in the upward direction bu or the downward direction bd as shown in FIG. 1. Therefore, the user cannot have the battery 9 housed in the battery housing part 22 via the battery attachment/detachment opening Op1 by moving the battery 9 in the downward direction bd. Moreover, the user cannot take out the battery 9 from the battery housing part 22 via the battery attachment/detachment opening Op1 by moving the battery 9 in the upward direction bu. For this reason, the battery attachment/detachment opening Op1 may not have a shape permitting passage of the battery 9 in the frontward direction bf or the backward direction bb and permitting the passage of the battery 9 in the upward direction bu or the downward direction bd. As a result, the area of the battery attachment/detachment opening Op1 decreases. Therefore, a decrease in the rigidity of the vehicle body 2 due to the presence of the battery attachment/detachment opening Op1 can be restricted. Further, since a decrease in the rigidity of the vehicle body 2 is restricted, there is no need of increasing the thickness of the vehicle body 2. As a result, an increase in the weight of the vehicle body 2 is restricted.

Moreover, according to the straddled electric vehicle 1, since a decrease in the rigidity of the vehicle body 2 is restricted, deformation of the vehicle body 2 will be restricted. To be more specific, in the straddled electric vehicle 1, the battery attachment/detachment opening Op1 is located between the front wheel 3 and the rear wheel 4 in the front-back direction fb. In this case, when the front wheel 3 or the rear wheel 4 is subjected to force from the road surface, the vehicle body 2 deforms in such a way that the spacing between the battery-housing-part left-side-face part 22311 and the battery-housing-part right-side-face part 2231r changes. The battery-housing-part left-side-face part 22311 is located to the left of the battery attachment/detachment opening Op1 in the vehicle-body left part 2231 as seen from above, that is, as seen in the downward direction d as shown in FIG. 3. The battery-housing-part right-side-face part 2231r is located to the right of the battery attachment/detachment opening Op1 in the vehicle-body right part 223r as seen from above, that is, as seen from in the downward direction d as shown in FIG. 3. For example, when the front wheel 3 is subjected to force F from the road surface in the upward direction u, the front part in the upper part of the battery housing part 22 is pushed in the backward direction b. That is, in the upper part of the battery housing part 22, the battery housing part 22 is subjected to force such that the distance between the front end of the battery housing part 22 and the rear end of the battery housing part 22 decreases. As a result, in the upper part of the battery housing part 22, the spacing between the battery-housing-part left-side-face part 22311 and the battery-housing-part right-side-face part 2231r tends to change. Accordingly, in the straddled electric vehicle 1, as described above, the battery attachment/detachment opening Op1 which is provided in the upper face of the battery housing part 22 is small. As a result, a decrease in the rigidity of the vehicle body 2 is restricted, and thus deformation of the vehicle body 2 is restricted more effectively. Moreover, since the battery attachment/detachment opening Op1 is small, the lid part 24 also becomes small. As the size of the lid part 24 decreases, the number of screws for securing the lid part 24 to the battery housing part 22 decreases. As a result, the weight of the straddled electric vehicle 1 is reduced.

Moreover, in the straddled electric vehicle 1, the battery attachment/detachment opening Op1 is located further upward than the bottom face 90b of the battery 9. As a result, a portion in the left face 90e of the battery 9 between the battery attachment/detachment opening Op1 and the bottom face 90b of the battery 9 will be supported by the battery-housing-part left-side-face part 22311. Similarly, a portion in the right face 90f of the battery 9 between the battery attachment/detachment opening Op1 and the bottom face 90b of the battery 9 will be supported by the battery-housing-part right-side-face part 2231r. As a result, the battery 9 is restricted from being displaced in the leftward direction 1 or the rightward direction r with respect to the vehicle body 2.

Moreover, in the straddled electric vehicle 1, the length of the vehicle body 2 in the left-right direction lr is smaller than the length of the vehicle body 2 in the front-back direction fb. That is, the length of the main member 25 in the left-right direction lr is smaller than the length of the main member 25 in the front-back direction fb. For that reason, the battery 9 to be mounted on the straddled electric vehicle 1 will have a smaller length in the left-right direction blr than in the front-back direction bfb. In such battery 9, a shape seen in the frontward direction bf or the backward direction bb will be smaller than a shape seen in the upward direction bu or the downward direction bd. Therefore, by arranging that the battery 9 is put into the battery housing part 22 while being moved in the frontward direction bf as described above, it is made possible to decrease the size of the battery attachment/detachment opening Op1. As a result, a decrease in the rigidity of vehicle body 2 due to the presence of the battery attachment/detachment opening Op1 is restricted.

Moreover, according to the straddled electric vehicle 1, it is possible to more effectively restrict a decrease in the rigidity of the vehicle body 2. To be more specific, in the straddled electric vehicle 1, the length Le of the long side of the front face 90c of the battery 9 is smaller than the length Lc of the long side of the bottom face 90b of the battery 9. For that reason, the front face 90c of the battery 9 is smaller than the bottom face 90b of the battery 9. The battery attachment/detachment opening Op1 has a shape that permits the battery 9 to pass in the frontward direction bf or the backward direction bb, and prevents the battery 9 from passing in the upward direction bu or the downward direction bd. That is, the battery attachment/detachment opening Op1 has a shape that permits the battery 9 to pass in a direction where a shape of the battery 9 tends to be relatively small, and prevents the battery 9 from passing in a direction where a shape of the battery 9 tends to be relatively large. Therefore, the battery attachment/detachment opening Op1 becomes small. As a result, according to the straddled electric vehicle 1, it is possible to more effectively restrict a decrease in the rigidity of the vehicle body 2.

Moreover, the straddled electric vehicle 1 includes the lid part 24 for covering the battery attachment/detachment opening Op1. For that reason, the battery housing part 22 is restricted by the lid part 24 from being deformed. As a result, according to the straddled electric vehicle 1, it is possible to more effectively restrict a decrease in the rigidity of the vehicle body 2.

Moreover, according to the straddled electric vehicle 1, heavy articles come closer to the center of the straddled electric vehicle 1 in the front-back direction fb. To be more specific, the battery 9 is disposed between the front axle Ax1 and the rear axle Ax2 in the front-back direction fb as seen from above, that is, as seen in the downward direction d. Therefore, the battery 9 is disposed near the center of the straddled electric vehicle 1 in the front-back direction fb. The power unit 8 is disposed below the battery 9. That is, the location of the power unit 8 in the front-back direction fb and the location of the battery 9 in the front-back direction fb are close to each other. The power unit 8 and the battery 9 are heavy articles in the straddled electric vehicle 1. As a result, in the straddled electric vehicle 1, the heavy articles tend to come closer to the center of the straddled electric vehicle 1 in the front-back direction fb.

Moreover, according to the straddled electric vehicle 1, the bottom face 90b of the battery 9 does not have a portion which is located above the vehicle body 2 as seen in the leftward direction 1 or the rightward direction r. As a result, the battery 9 will be located further downward in the straddled electric vehicle 1.

Moreover, according to the straddled electric vehicle 1, the battery 9 does not have a portion which is located above the vehicle body 2 as seen in the leftward direction 1 or the rightward direction r. As a result, the battery 9 will become located further downward in the straddled electric vehicle 1.

Moreover, according to the straddled electric vehicle 1, the battery 9 becomes less likely to be displaced with respect to the vehicle body 2. To be more specific, in the straddled electric vehicle 1, the battery housing part 22 includes the battery-housing-part left-side-face part 22311 that is to be brought into contact with the battery 9 from the left, and the battery-housing-part right-side-face part 2231r that is to be brought into contact with the battery 9 from the right. As a result, the left face 90e of the battery 9 becomes supported by the battery-housing-part left-side-face part 22311. Also, the right face 90f of the battery 9 becomes supported by the battery-housing-part right-side-face part 2231r. As a result, the battery 9 becomes less likely to be displaced in the leftward direction 1 or the rightward direction r with respect to the vehicle body 2.

Moreover, according to the straddled electric vehicle 1, it is possible to decrease the length of the battery attachment/detachment opening Op1 in the front-back direction fb. To be more specific, the battery attachment/detachment opening Op1 is located above the battery 9 when the battery 9 is housed in the battery housing space Sp. Further, the front end of the battery attachment/detachment opening Op1 is located further backward than the front end of the battery 9. Therefore, the user inserts the battery 9 into the battery housing part 22 by moving the battery 9 in the lower-front direction fd with the front face 90c of the battery 9 being kept facing in the lower-front direction fd as shown in FIG. 7. Thereafter, the user has the battery 9 housed in the battery housing part 22 by rotating the battery 9 clockwise around the lower end of the front face 90c of the battery 9 as seen from the left, that is, as seen in the rightward direction r as shown in FIG. 9. At this moment, the lower end of the front face 90c of the battery 9 is located further frontward than the front end of the battery attachment/detachment opening Op1. For that reason, even when the length of the battery attachment/detachment opening Op1 in the front-back direction fb is smaller than the length of the bottom face 90b of the battery 9 in the front-back direction fb, the rear end of the bottom face 90b of the battery 9 can pass through the battery attachment/detachment opening Op1. As a result, according to the straddled electric vehicle 1, it is possible to decrease the length of the battery attachment/detachment opening Op1 in the front-back direction fb.

Moreover, according to the straddled electric vehicle 1, the battery attachment/detachment opening Op1 and the upper face 90a of the battery 9 have shapes similar to each other as seen in the leftward direction 1 or the rightward direction r. This makes it possible to bring the battery attachment/detachment opening Op1 and the upper face 90a of the battery 9 close to each other. Therefore, in the straddled electric vehicle 1, it is possible to achieve advantages according to (a) or (b):
(a) Useless regions are reduced in the battery housing space Sp, thus downsizing the vehicle body 2, and
(b) A larger battery 9 is housed in the battery housing space Sp.

### (Other Embodiments)

Embodiments and variants to which at least either one of description and illustration is given in the present specification are for the purpose of facilitating the understanding of the present disclosure, and are not intended to limit the scope of the invention which is defined by the appended claims.

Note that, in the straddled electric vehicle 1, the length Le of the long side of the front face 90c of the battery 9 is smaller than the length Lc of the long side of the bottom face 90b of the battery 9. However, the length Le of the long side of the front face 90c of the battery 9 may be larger than the length Lc of the long side of the bottom face 90b of the battery 9.

Note that a shape of the battery 9 seen in the backward direction bb may not be the same shape as the front face 90c of the battery 9. There is a case in which a protrusion such as a handle is provided at the upper face 90a of the battery 9. In such a case, the shape of the battery 9 seen in the backward direction bb has a shape in which the front face 90c of the battery 9 and the protrusion are joined. From the same reason, the shape of the battery 9 seen in the upward direction bu may not be the same shape as the bottom face 90b of the battery 9.

Note that the shape of the battery 9 may not be an L shape as seen from the left, that is, as seen in the rightward direction r as shown in FIG. 1. Therefore, the step 91 may not be provided in the upper face of the battery 9.

Note that, in the straddled electric vehicle 1, the power unit 8 is disposed below the battery 9. However, the power unit 8 may be disposed in a location other than below the battery 9.

Note that, in the straddled electric vehicle 1, the battery attachment/detachment opening Op1 is provided in the upper face of the battery housing part 22. However, the battery attachment/detachment opening Op1 may be provided in the left face or right face of the battery housing part 22.

Note that the straddled electric vehicle 1 may not be a two-wheel leaning vehicle. That is, the vehicle body 2 may not lean in the leftward direction L when turning to the leftward direction L, and may not lean in the rightward direction R when turning to the rightward direction R. The vehicle body 2, for example, may lean in the rightward direction R when turning to the leftward direction L, and may lean in the leftward direction L when turning to the rightward direction R.

Note that, in the straddled electric vehicle 1, the vehicle body 2 is formed of a fiber-reinforced resin in which the resin is reinforced by fibers. However, the vehicle body 2 may not be formed of the fiber-reinforced resin in which the resin is reinforced by fibers. The vehicle body 2 may be formed of a material (for example, a metal such as iron and aluminum) other than the fiber-reinforced resin in which the resin is reinforced by fibers.

Note that, in the straddled electric vehicle 1, fibers in the attachment surface part 234 extend in the left-right direction lr. However, the fibers in the attachment surface part 234 may extend in a direction (for example, the up-down direction ud) other than the left-right direction lr.

Note that, in the straddled electric vehicle 1, fibers of the shock-absorber-attachment-part left-side-face part 2351 extend in the up-down direction ud. However, the fibers of the shock-absorber-attachment-part left-side-face part 2351 may extend in a direction (for example, the left-right direction lr) other than the up-down direction ud. Moreover, in the straddled electric vehicle 1, fibers of the shock-absorber-attachment-part right-side-face part 235r extend in the up-down direction ud. However, the fibers of the shock-absorber-attachment-part right-side-face part 235r may extend in a direction (for example, the left-right direction lr) other than the up-down direction ur.

Note that, in the straddled electric vehicle 1, the vehicle body 2 is formed of carbon fiber-reinforced resin in which resin is reinforced with a fiber sheet including fibers. However, the vehicle body 2 may be formed of a fiber-reinforced resin in which unwoven fibers instead of the fiber sheet are used. Also, the fiber may be continuous fibers of a predetermined length (for example, not less than 1 mm), or may be discontinuous fibers.

Note that, in the straddled electric vehicle 1, the power unit 8 is supported by the battery housing part 22. However, the power unit 8 may be supported by a configuration other than the battery housing part 22. For example, the power unit 8 may be supported by a swing arm 61.

Note that, in the straddled electric vehicle 1, the battery housing part 22 is a box-type monocoque frame. However, the battery housing part 22 will not be limited to the box-type monocoque frame. The battery housing part 22 may be any of, for example, a double cradle frame, a diamond frame, a truss frame, and a twin-spar frame. The battery housing part 22 may be a semi-monocoque frame.

Note that, in the straddled electric vehicle 1, the lower end of the shock absorber 62 is directly supported by a swing arm 61. However, the lower end of the shock absorber 62 may not be directly supported by the swing arm 61. The lower end of the shock absorber 62 may be supported by the swing arm 61, for example, via a link member.

Note that the straddled electric vehicle 1 has been supposed to be a vehicle for motorcycle trials. However, the straddled electric vehicle 1 may be a vehicle other than the vehicle for motorcycle trials. The straddled electric vehicle 1 may be any of a super-sport-type vehicle, a tourer-type vehicle, a naked-type vehicle, a cruiser-type vehicle, a scooter-type vehicle, and a motocross-type vehicle. The vehicle for motorcycle trials and the motocross-type vehicle are off-road vehicles. The super-sport-type vehicle, the tourer-type vehicle, the naked-type vehicle, the cruiser-type vehicle, and the scooter-type vehicle are on-road vehicles. The straddled electric vehicle 1 may be an ATV.

Moreover, the straddled electric vehicle 1 includes one front wheel 3. However, the straddled electric vehicle 1 may include two or more front wheels. In this case, the straddled electric vehicle 1 includes two or more front axles. Further, the straddled electric vehicle 1 includes one rear wheel 4. However, the straddled electric vehicle 1 may include two or more rear wheels. In this case, the straddled electric vehicle 1 includes two or more rear axles.

Note that the battery 9 may be a battery other than the lithium ion battery. Thus, the battery 9 may be, for example, a lead storage battery, a nickel-metal hydride battery, an all-solid-state battery, or the like.

### REFERENCE SIGNS LIST

1: Straddled electric vehicle
2: Vehicle body
3: Front wheel
4: Rear wheel
5: Steering mechanism
6: Suspension
7: Seat
8: Power unit
9: Battery
10: Control apparatus
10a: Control circuit
10b: Heat sink
21: Steering-mechanism supporting part
22: Battery housing part
22a: Battery-housing-part front face
23: Shock-absorber attachment part
24: Lid
25: Main member
51: Handlebar
52: Steering shaft
53: Front fork
61: Swing arm
62: Shock absorber
80: Electric motor
90a: Upper face
90b: Bottom face
90c: Front face
90d: Back face
90e: Left face
90f: Right face
91: Step
91a: Connection surface
91b, 91c: Upper face part
221: Battery-housing-part upper part
222: Battery-housing-part lower part
2231: Vehicle-body left part
223r: Vehicle-body right part
231: Tube part
232: Bottom face part
2331: Left-side-face-part supported part
233r: Right-side-face-part supported part
234: Attachment surface part
2351: Shock-absorber-attachment-part left-side-face part
235r: Shock-absorber-attachment-part right-side-face part
2231l: Battery-housing-part left-side-face part
2231r: Battery-housing-part right-side-face part
Ax1: Front axle
Ax2: Rear axle
Op1: Battery attachment/detachment opening
Op2, Op3: Opening
Sp0: Battery frontward space
Sp: Battery housing space

## Claims

1. A straddled electric vehicle (1), comprising:
a plurality of wheels including one or more front wheels (3) disposed to be rotatable around a front axle (Ax1) and one or more rear wheels (4) disposed to be rotatable around a rear axle (Ax2);
a vehicle body (2) that supports the plurality of wheels, the vehicle body (2) including a main member (25) subjected to load from at least one wheel of the plurality of wheels and straddled by a rider;
a power unit (8) supported by the vehicle body (2) and including an electric motor (80) configured to generate a driving force for rotating at least one wheel of the plurality of wheels; and
a battery (9) supported by the main member (25), the battery (9) being configured to supply power to the electric motor (80),
wherein the main member (25) includes a battery housing part (22), the battery housing part (22) including:
a battery housing space (Sp) for housing the battery, the battery housing space (Sp) being located between the front axle (Ax1), which is a rotational center of that front wheel (3), among the one or more front wheels (3), that is located most backward, and the rear axle (Ax2), which is a rotational center of that rear wheel (4), among the one or more rear wheels (4), that is located most frontward in a vehicle-body front-back direction when the vehicle body (2) is seen in a downward direction; and
a battery attachment/detachment opening (Op1) having a shape permitting the battery (9) to pass in a battery frontward or backward direction, and preventing the battery (9) from passing in a battery upward or downward direction, and connecting an external space, which is a space around the main member (25), with the battery housing space (Sp), the battery attachment/detachment opening (Op1) being located further upward in a vehicle-body upward direction than a bottom face (90b) of the battery (9) with the battery (9) being housed in the battery housing space (Sp),
wherein the straddled electric vehicle further comprises a seat (7) supported at a rear part of the battery housing part (22), wherein the rider sits on the seat (7),
wherein a length of the battery attachment/detachment opening (Op1) in the vehicle-body front-back direction (fb) is smaller than a length of the bottom face (90b) of the battery (9) in the vehicle-body front-back direction (fb), wherein an upper end of a front end part of the battery (9) is located further upward in the vehicle-body upward direction than an upper end of a rear end part of the battery (9),
**characterized in that**
the battery (9) is inserted into the battery housing part (22) by moving the battery (9) in a vehicle-body lower-front direction (fd) with a front face (90c) of the battery (9) being kept facing in the vehicle-body lower-front direction (fd),
wherein, thereafter, the battery (9) is housed in the battery housing part (22) by rotating the battery (9) clockwise around a lower end of the front face (90c) of the battery (9) as seen in a vehicle-body rightward direction (r), thereby passing a rear end of the bottom face (90b) of the battery (9) through the battery attachment/detachment opening (Op1),
wherein, with the battery (9) being housed in the battery housing space (Sp),
the battery attachment/detachment opening (Op1) is located above the battery (9) in the vehicle-body upward direction,
a front end of the battery attachment/detachment opening (Op1) is located further backward in a vehicle-body backward direction than a front end of the battery, and
the front end of the battery attachment/detachment opening (Op1) is located further upward in the vehicle-body upward direction than a rear end of the battery attachment/detachment opening (Op1).

2. The straddled electric vehicle (1) according to claim 1, wherein
a length of the battery (9) in a battery up-down direction as seen in the battery frontward or backward direction is smaller than a length of the battery (9) in a battery front-back direction as seen in the upward or downward direction.

3. The straddled electric vehicle (1) according to claim 1 or 2, wherein the battery attachment/detachment opening (Op1) is disposed between the front wheel (3) located most backward among the one or more front wheels (3) and the rear wheel (4) located most frontward among the one or more rear wheels (4) in the vehicle-body front-back direction.

4. The straddled electric vehicle (1) according to any one of claims 1 to 3, further comprising:
a steering mechanism (5) that steers the one or more front wheels (3) according to an operation of the rider; and
a steering-mechanism supporting part (21) that supports the steering mechanism (5), wherein the battery housing part (22) is disposed behind the steering-mechanism supporting part (21) as seen in the vehicle-body downward direction, and
wherein the steering-mechanism supporting part (21) and the battery housing part (22) are formed as a single member.

5. The straddled electric vehicle (1) according to any one of claims 1 to 4, wherein the battery attachment/detachment opening (Op1) is provided in an upper face (90a), a left face (90e), or a right face (90f) of the battery housing part (22).

6. The straddled electric vehicle (1) according to any one of claims 1 to 5, wherein
the main member (25) includes a lid part (24) for covering the battery attachment/detachment opening (Op1).

7. The straddled electric vehicle (1) according to any one of claims 1 to 6, wherein
the power unit (8) is disposed below the battery (9) in the vehicle-body (2) downward direction.

8. The straddled electric vehicle (1) according to any one of claims 1 to 7, wherein
the bottom face (90b) of the battery (9) does not have a portion which is located above the main member (25) in the vehicle-body upward direction as seen in a vehicle-body leftward direction or the vehicle-body rightward direction.

9. The straddled electric vehicle (1) according to claim 8, wherein
the battery (9) does not have a portion which is located above the main member (25) in the vehicle-body upward direction as seen in the vehicle-body leftward or rightward direction.

10. The straddled electric vehicle (1) according to any one of claims 1 to 9, wherein
the battery housing part (22) includes a battery-housing-part left-side-face part (2231l) that is to be brought into contact with the battery (9) from the left of the vehicle body (2), and a battery-housing-part right-side-face part (2231r) that is to be brought into contact with the battery (9) from the right of the vehicle body (2).

## Patentansprüche

1. Ein rittlings zu fahrendes Elektrofahrzeug (1), das folgende Merkmale aufweist:
eine Mehrzahl von Rädern, die ein oder mehrere Vorderräder (3), das beziehungsweise die drehbar um eine Vorderachse (Ax1) herum angeordnet ist beziehungsweise sind, und ein oder mehrere Hinterräder (4), das beziehungsweise die drehbar um eine Hinterachse (Ax2) herum angeordnet ist beziehungsweise sind, umfassen;
eine Fahrzeugkarosserie (2), die die Mehrzahl von Rädern trägt, wobei die Fahrzeugkarosserie (2) ein Hauptbauglied (25) umfasst, das einer Last von zumindest einem Rad der Mehrzahl von Rädern unterworfen ist und auf dem ein Fahrer rittlings sitzt;
eine Leistungseinheit (8), die durch die Fahrzeugkarosserie (2) getragen wird und einen Elektromotor (80) umfasst, der dazu ausgebildet ist, eine Antriebskraft zum Drehen zumindest eines Rades der Mehrzahl von Rädern zu erzeugen; und
eine durch das Hauptbauglied (25) getragene Batterie (9), wobei die Batterie (9) dazu ausgelegt ist, den Elektromotor (80) mit Leistung zu versorgen,
wobei das Hauptbauglied (25) ein Batteriegehäuseteil (22) umfasst, wobei das Batteriegehäuseteil (22) folgende Merkmale umfasst:
einen Batteriegehäuseraum (Sp) zum Einhäusen der Batterie, wobei sich der Batteriegehäuseraum (Sp) zwischen der Vorderachse (Ax1), die ein Drehzentrum desjenigen Vorderrades (3) des einen oder der mehreren Vorderräder (3) ist, das sich in einer Vorne-Hinten-Richtung der Fahrzeugkarosserie am weitesten hinten befindet, und der Hinterachse (Ax2), die ein Drehzentrum desjenigen Hinterrades (4) des einen oder der mehreren Hinterräder (4) ist, das sich am weitesten vorne befindet, wenn die Fahrzeugkarosserie (2) in einer Abwärtsrichtung betrachtet wird; und
eine Batteriebefestigungs-/-ablöseöffnung (Op1), die eine Form aufweist, die ermöglicht, dass die Batterie (9) in einer Vorwärts- oder Rückwärtsrichtung der Batterie passiert, und die verhindert, dass die Batterie (9) in einer Aufwärts- oder Abwärtsrichtung der Batterie passiert, und die einen Außenraum, der ein Raum um das Hauptbauglied (25) herum ist, mit dem Batteriegehäuseraum (Sp) verbindet, wobei sich die Batteriebefestigungs-/ablöseöffnung (Op1) in einer Aufwärtsrichtung der Fahrzeugkarosserie weiter oben befindet als eine Unterseite (90b) der Batterie (9), während die Batterie (9) in dem Batteriegehäuseraum (Sp) eingehäust ist,
wobei das rittlings zu fahrende Elektrofahrzeug ferner einen Sitz (7) aufweist, der an einem hinteren Teil des Batteriegehäuseteils (22) getragen wird, wobei der Fahrer auf dem Sitz (7) sitzt,
wobei eine Länge der Batteriebefestigungs-/-ablöseöffnung (Op1) in der Vorne-Hinten-Richtung der Fahrzeugkarosserie (fb) geringer ist als eine Länge der Unterseite (90b) der Batterie (9) in der Vorne-Hinten-Richtung der Fahrzeugkarosserie (fb),
wobei sich ein oberes Ende eines Vorderendteils der Batterie (9) in der Aufwärtsrichtung der Fahrzeugkarosserie weiter oben befindet als ein oberes Ende eines Rückendteils der Batterie (9),
**dadurch gekennzeichnet, dass**
die Batterie (9) in das Batteriegehäuseteil (22) eingefügt wird, indem die Batterie in einer Unten-Vorne-Richtung (fd) der Fahrzeugkarosserie bewegt wird, während die Vorderseite (90c) der Batterie (9) der unteren Unten-Vorne-Richtung der Fahrzeugkarosserie (fd) zugewandt gehalten wird,
wobei die Batterie (9) danach in das Batteriegehäuseteil (22) eingehäust wird, indem die Batterie (9) im Uhrzeigersinn um ein unteres Ende der Vorderseite (90c) der Batterie (9), in einer Rechts-Richtung der Fahrzeugkarosserie (r) gesehen, gedreht wird, wodurch ein hinteres Ende der Unterseite (90b) der Batterie (9) die Batteriebefestigungs-/-ablöseöffnung (Op1) passiert,
wobei sich dann, während die Batterie (9) in dem Batteriegehäuseraum (Sp) eingehäust ist,
die Batteriebefestigungs-/-ablöseöffnung (Op1) in der Aufwärtsrichtung der Fahrzeugkarosserie über der Batterie (9) befindet,
sich ein Vorderende der Batteriebefestigungs-/-ablöseöffnung (Op1) in einer Rückwärtsrichtung der Fahrzeugkarosserie weiter hinten befindet als ein Vorderende der Batterie, und
sich das Vorderende der Batteriebefestigungs-/-ablöseöffnung (Op1) in der Aufwärtsrichtung der Fahrzeugkarosserie weiter oben befindet als ein hinteres Ende der Batteriebefestigungs-/-ablöseöffnung (Op1).

2. Das rittlings zu fahrende Elektrofahrzeug (1) gemäß Anspruch 1, bei dem
eine Länge der Batterie (9) in einer Auf-Ab-Richtung der Batterie in der Vorwärts- oder Rückwärts-Richtung der Batterie gesehen geringer ist als eine Länge der Batterie (9) in einer Vorne-Hinten-Richtung der Batterie, in der Aufwärts- oder AbwärtsRichtung betrachtet.

3. Das rittlings zu fahrende Elektrofahrzeug (1) gemäß Anspruch 1 oder 2, bei dem die Batteriebefestigungs-/-ablöseöffnung (Op1) zwischen dem Vorderrad (3), das sich von dem einen oder den mehreren Vorderrädern (3) in der Vorne-Hinten-Richtung der Fahrzeugkarosserie am weitesten hinten befindet, und dem Hinterrad (4), das sich von dem einen oder den mehreren Hinterrädern (4) am weitesten vorne befindet, angeordnet ist.

4. Das rittlings zu fahrende Elektrofahrzeug (1) gemäß einem der Ansprüche 1 bis 3, das ferner folgende Merkmale aufweist:
einen Lenkmechanismus (5), der das eine oder die mehreren Vorderräder (3) gemäß der Bedienung des Fahrers lenkt; und
ein Lenkmechanismus-Trageteil (21), das den Lenkmechanismus (5) trägt, wobei das Batteriegehäuseteil (22) in der Abwärtsrichtung der Fahrzeugkarosserie betrachtet hinter dem Lenkmechanismus-Trageteil (21) angeordnet ist, und
wobei das Lenkmechanismus-Trageteil (21) und das Batteriegehäuseteil (22) als ein einziges Bauglied gebildet sind.

5. Das rittlings zu fahrende Elektrofahrzeug (1) gemäß einem der Ansprüche 1 bis 4, bei dem die Batteriebefestigungs-/-ablöseöffnung (Op1) in einer Oberseite (90a), einer linken Seite (90e) oder einer rechten Seite (90f) des Batteriegehäuseteils (22) vorgesehen ist.

6. Das rittlings zu fahrende Elektrofahrzeug (1) gemäß einem der Ansprüche 1 bis 5, bei dem
das Hauptbauglied (25) ein Deckelteil (24) zum Abdecken der Batteriebefestigungs-/-ablöseöffnung (Op1) umfasst.

7. Das rittlings zu fahrende Elektrofahrzeug (1) gemäß einem der Ansprüche 1 bis 6, bei dem
die Leistungseinheit (8) in der Abwärtsrichtung der Fahrzeugkarosserie (2) unter der Batterie (9) angeordnet ist.

8. Das rittlings zu fahrende Elektrofahrzeug (1) gemäß einem der Ansprüche 1 bis 7, bei dem
die Unterseite (90b) der Batterie (9) keinen Abschnitt aufweist, der sich in der Aufwärtsrichtung der Fahrzeugkarosserie, in der Links-Richtung der Fahrzeugkarosserie oder der Rechts-Richtung der Fahrzeugkarosserie betrachtet, über dem Hauptbauglied (25) befindet.

9. Das rittlings zu fahrende Elektrofahrzeug (1) gemäß Anspruch 8, bei dem die Batterie (9) keinen Abschnitt aufweist, der sich in der Aufwärtsrichtung der Fahrzeugkarosserie, in der Links-Richtung oder der Rechts-Richtung der Fahrzeugkarosserie betrachtet, über dem Hauptbauglied (25) befindet.

10. Das rittlings zu fahrende Elektrofahrzeug (1) gemäß einem der Ansprüche 1 bis 9, bei dem
das Batteriegehäuseteil (22) ein linksseitiges Teil des Batteriegehäuses (22311) umfasst, das von der linken Seite der Fahrzeugkarosserie (2) aus mit der Batterie (9) in Kontakt zu bringen ist, und ein rechtsseitiges Teil des Batteriegehäuses (2231r) umfasst, das von der rechten Seite der Fahrzeugkarosserie (2) aus mit der Batterie (9) in Kontakt zu bringen ist, umfasst.

## Revendications

1. Véhicule électrique à enfourcher (1), comprenant:
une pluralité de roues comportant une ou plusieurs roues avant (3) disposées de manière à pouvoir tourner autour d'un essieu avant (Ax1) et une ou plusieurs roues arrière (4) disposées de manière à pouvoir tourner autour d'un essieu arrière (Ax2);
une carrosserie de véhicule (2) qui supporte la pluralité de roues, la carrosserie de véhicule (2) comportant un élément principal (25) soumis à une charge provenant d'au moins une roue de la pluralité de roues et enjambé par un conducteur;
une unité de puissance (8) supportée par la carrosserie de véhicule (2) et comportant un moteur électrique (80) configuré pour générer une force d'entraînement destinée à faire tourner au moins une roue de la pluralité de roues; et
une batterie (9) supportée par l'élément principal (25), la batterie (9) étant configurée pour alimenter du courant vers le moteur électrique (80),
dans lequel l'élément principal (25) comporte une partie de boîtier de batterie (22), la partie de boîtier de batterie (22) comportant:
un espace de logement de batterie (Sp) destiné à accommoder la batterie, l'espace de logement de batterie (Sp) étant situé entre l'essieu avant (Ax1), qui est un centre de rotation de la roue avant (3), parmi les une ou plusieurs roues avant (3), qui est située le plus en arrière, et l'essieu arrière (Ax2), qui est un centre de rotation de la roue arrière (4), parmi les une ou plusieurs roues arrière (4), qui est située le plus en avant dans une direction avant-arrière de la carrosserie de véhicule lorsque la carrosserie de véhicule (2) est vue dans une direction vers le bas; et
une ouverture de fixation/de retrait de la batterie (Op1) présentant une forme permettant à la batterie (9) de passer dans une direction vers l'avant ou vers l'arrière de la batterie, et empêchant la batterie (9) de passer dans une direction vers le haut ou vers le bas de la batterie, et connectant un espace extérieur, qui est un espace autour de l'élément principal (25), à l'espace de logement de batterie (Sp), l'ouverture de fixation/de retrait de la batterie (Op1) étant située plus vers le haut dans une direction vers le haut de la carrosserie de véhicule qu'une face inférieure (90b) de la batterie (9) lorsque la batterie (9) est accommodée dans l'espace de logement de batterie (Sp),
dans lequel le véhicule électrique à enfourcher comprend par ailleurs un siège (7) supporté sur une partie arrière de la partie de boîtier de batterie (22), dans lequel le conducteur est assis sur le siège (7),
dans lequel une longueur de l'ouverture de fixation/de retrait de batterie (Op1) dans la direction avant-arrière de la carrosserie de véhicule (fb) est plus petite qu'une longueur de la face inférieure (90b) de la batterie (9) dans la direction avant-arrière de la carrosserie de véhicule (fb),
dans lequel une extrémité supérieure d'une partie d'extrémité avant de la batterie (9) est située plus vers le haut dans la direction vers le haut de la carrosserie de véhicule qu'une extrémité supérieure d'une partie d'extrémité arrière de la batterie (9),
**caractérisé par le fait que**
la batterie (9) est insérée dans la partie de boîtier de batterie (22) en déplaçant la batterie (9) dans une direction vers l'avant et vers le bas de la carrosserie de véhicule (fd) lorsqu'une face avant (90c) de la batterie (9) est maintenue tournée de manière à faire face dans la direction vers l'avant et vers le bas de la carrosserie (fd),
dans lequel, ensuite, la batterie (9) est accommodée dans la partie de boîtier de batterie (22) en faisant tourner la batterie (9) dans le sens des aiguilles d'une montre autour d'une extrémité inférieure de la face avant (90c) de la batterie (9), tel que vu dans une direction vers la droite de la carrosserie du véhicule (r), en faisant passer ainsi une extrémité arrière de la face inférieure (90b) de la batterie (9) à travers l'ouverture de fixation/de retrait de batterie (Opl),
dans lequel, lorsque la batterie (9) est accommodée dans l'espace de logement de batterie (Sp),
l'ouverture de fixation/de retrait de batterie (Op1) est située au-dessus de la batterie (9) dans la direction vers le haut de la carrosserie de véhicule,
une extrémité avant de l'ouverture de fixation/de retrait de batterie (Op1) est située plus en arrière dans une direction vers l'arrière de la carrosserie de véhicule qu'une extrémité avant de la batterie, et
l'extrémité avant de l'ouverture de fixation/de retrait de batterie (Op1) est située plus vers le haut dans la direction vers le haut de la carrosserie de véhicule qu'une extrémité arrière de l'ouverture de fixation/de retrait de batterie (Op1).

2. Véhicule électrique à enfourcher (1) selon la revendication 1, dans lequel
une longueur de la batterie (9) dans une direction haut-bas de la batterie telle que vue dans la direction vers l'avant ou vers l'arrière de la batterie est plus petite qu'une longueur de la batterie (9) dans une direction avant-arrière de la batterie telle que vue dans la direction vers le haut ou vers le bas.

3. Véhicule électrique à enfourcher (1) selon la revendication 1 ou 2, dans lequel l'ouverture de fixation/de retrait de batterie (Op1) est disposée entre la roue avant (3) située la plus en arrière parmi les une ou plusieurs roues avant (3) et la roue arrière (4) située la plus en avant parmi les une ou plusieurs roues arrière (4) dans la direction avant-arrière de la carrosserie de véhicule.

4. Véhicule électrique à enfourcher (1) selon l'une quelconque des revendications 1 à 3, comprenant par ailleurs:
un mécanisme de direction (5) qui dirige les une ou plusieurs roues avant (3) selon un actionnement par le conducteur; et
une partie de support de mécanisme de direction (21) qui supporte le mécanisme de direction (5), où la partie de boîtier de batterie (22) est disposée derrière la partie de support de mécanisme de direction (21) telle que vue dans la direction vers le bas de la carrosserie de véhicule, et
dans lequel la partie de support de mécanisme de direction (21) et la partie de boîtier de batterie (22) sont formées comme un seul élément.

5. Véhicule électrique à enfourcher (1) selon l'une quelconque des revendications 1 à 4,
dans lequel l'ouverture de fixation/de retrait de batterie (Op1) est prévue dans une face supérieure (90a), une face gauche (90e) ou une face droite (90f) de la partie de boîtier de batterie (22).

6. Véhicule électrique à enfourcher (1) selon l'une quelconque des revendications 1 à 5, dans lequel
l'élément principal (25) comporte une partie de couvercle (24) destinée à couvrir l'ouverture de fixation/de retrait de batterie (Op1).

7. Véhicule électrique à enfourcher (1) selon l'une quelconque des revendications 1 à 6, dans lequel
l'unité de puissance (8) est disposée au-dessous de la batterie (9) dans la direction vers le bas de la carrosserie de véhicule (2).

8. Véhicule électrique à enfourcher (1) selon l'une quelconque des revendications 1 à 7, dans lequel
la face inférieure (90b) de la batterie (9) ne présente pas de partie qui est située au-dessus de l'élément principal (25) dans la direction vers le haut de la carrosserie de véhicule lorsque vue dans la direction vers la gauche de la carrosserie de véhicule ou dans la direction vers la droite de la carrosserie de véhicule.

9. Véhicule électrique à enfourcher (1) selon la revendication 8, dans lequel
la batterie (9) ne présente pas de partie qui est située au-dessus de l'élément principal (25) dans la direction vers le haut de la carrosserie de véhicule telle que vue dans la direction vers la gauche ou vers la droite de la carrosserie de véhicule.

10. Véhicule électrique à enfourcher (1) selon l'une quelconque des revendications 1 à 9, dans lequel
la partie de boîtier de batterie (22) comporte une partie de face du côté gauche de la partie de boîtier de batterie (22311) qui doit être amenée en contact avec la batterie (9) depuis la gauche de la carrosserie de véhicule (2), et une partie de face du côté droit de la partie de boîtier de batterie (2231r) qui doit être amenée en contact avec la batterie (9) depuis la droite de la carrosserie de véhicule (2).
